# EUROPEAN PATENT APPLICATION

(11) **EP 4 579 242 A1**
(43) Date of publication of application: **02.07.2025**
(21) Application number: 23856926.3
(22) Date of filing: 02.06.2023
(51) Int. Cl.: G01N 35/00

(54) **AUTOMATIC ANALYSIS DEVICE**

(30) Priority: 23.08.2022 JP 2022132651
(71) Applicant: HITACHI HIGH-TECH CORPORATION, Tokyo 105-6409 (JP)
(72) Inventor: FUNAKOSHI, Sunao, Tokyo 100-8280 (JP); OKUSA, Takenori, Tokyo 105-6409 (JP); ISOSHIMA, Nobuyuki, Tokyo 105-6409 (JP); YOKOYAMA, Koki, Tokyo 105-6409 (JP)
(74) Representative: Strehl & Partner mbB
(86) International application number: PCT/JP2023/020605
(87) International publication number: WO 2024/042808

(57) **Abstract**

An automatic analyzer includes: an analysis unit configured to perform an analysis on a specimen; and a processing unit configured to perform a preprocess on the specimen before the analysis. The processing unit is provided with a temperature adjustment unit configured to heat or cool air inside the processing unit, the temperature adjustment unit includes a first reagent temperature adjustment unit and a second reagent temperature adjustment unit, the first reagent temperature adjustment unit has a configuration for heating or cooling a first reagent by contact heat transfer, the second reagent temperature adjustment unit has a configuration for heating or cooling a second reagent by the contact heat transfer or forced convection heat transfer, and the first reagent temperature adjustment unit is configured to have a heat exchange amount larger than a heat exchange amount of the second reagent temperature adjustment unit. Accordingly, a plurality of reagents can be adjusted to have appropriate temperatures regardless of an ambient temperature of the automatic analyzer.

## Description

### Technical Field

The present disclosure relates to an automatic analyzer.

### Background Art

An automatic analyzer is an analyzer that performs an analysis by aliquoting a specimen solution containing a substance to be analyzed and a reaction reagent into a reaction container to cause a reaction, and optically measuring the reaction solution. For example, there is an automatic analyzer for detecting a specific biological component, chemical substance, or the like contained in a sample such as blood, serum, or urine.

A temperature of the reagent used for the analysis in the automatic analyzer needs to be appropriately controlled.

PTL 1 discloses an automatic analyzer including a heat exchanger for adjusting a temperature around a pipe for supplying a reagent to a magnetic separation unit, in which the heat exchanger includes a fan for blowing air subjected to a heat exchange in an absorption and radiation unit, which has a configuration in which the air blown from the fan hits the pipe, a configuration in which the reagent pipe passes through the fin of the heat exchanger, and the like.

### Citation List

### Patent Literature

PTL 1: WO2020/235162

### Summary of Invention

### Technical Problem

In order to obtain sufficient analysis accuracy in the automatic analyzer, it is necessary to maintain temperatures of a reagent used for a preprocess of an analysis such as magnetic separation and a reagent supplied to a detector at predetermined temperatures. In particular, when stirring after the magnetic separation is performed in a place having a temperature environment different from that of the magnetic separation unit, it is necessary to adjust the temperature of the reagent supplied to a reaction container of the magnetic separation unit and the temperature of the reagent directly supplied to an analysis unit to different temperatures in order to make the temperature of the reaction solution after completion of stirring appropriate.

In the automatic analyzer described in PTL 1, when the temperature of the reagent supplied to the magnetic separation unit, which is in a preprocess step, and the temperature of the reagent supplied to the analysis unit are set to different temperatures, a temperature difference is limited to a limited range. In the future, while more stable analysis performance is required, it is desirable to expand an adjustment range of the temperature difference, and the temperature can be adjusted more accurately.

An object of the disclosure is to adjust a plurality of reagents to have appropriate temperatures regardless of an ambient temperature of an automatic analyzer.

### Solution to Problem

An automatic analyzer according to the disclosure includes an analysis unit configured to perform an analysis on a specimen, and a processing unit configured to perform a preprocess on the specimen before the analysis. The processing unit is provided with a temperature adjustment unit configured to heat or cool air inside the processing unit, the temperature adjustment unit includes a first reagent temperature adjustment unit and a second reagent temperature adjustment unit, the first reagent temperature adjustment unit has a configuration for heating or cooling a first reagent by contact heat transfer, the second reagent temperature adjustment unit has a configuration for heating or cooling a second reagent by contact heat transfer or forced convection heat transfer, and the first reagent temperature adjustment unit is configured to have a heat exchange amount larger than a heat exchange amount of the second reagent temperature adjustment unit.

### Advantageous Effects of Invention

According to the disclosure, a plurality of reagents can be adjusted to have appropriate temperatures regardless of an ambient temperature of the automatic analyzer.

### Brief Description of Drawings

[FIG. 1] FIG. 1 is a schematic configuration diagram showing an automatic analyzer according to Embodiment 1.
[FIG. 2] FIG. 2 is a configuration diagram showing a temperature adjustment unit 1 in FIG. 1.
[FIG. 3A] FIG. 3A is a perspective view showing internal fins 3 and an internal fin base 4 in FIG. 2.
[FIG. 3B] FIG. 3B is a perspective view of the internal fins 3 and the internal fin base 4 as viewed from a direction different from that in FIG. 3A.
[FIG. 4] FIG. 4 is a perspective view showing a reagent temperature adjustment unit fin 27 in FIG. 3A.
[FIG. 5] FIG. 5 is a perspective view showing a structure of a second reagent temperature adjustment unit 14 in FIG. 1.
[FIG. 6A] FIG. 6A is a graph showing a relationship between an ambient temperature of the automatic analyzer according to Embodiment 1, a temperature of a first reagent, and a temperature of a reaction solution after stirring.
[FIG. 6B] FIG. 6B is a graph showing a relationship between the ambient temperature of the automatic analyzer according to Embodiment 1 and a temperature of a second reagent.
[FIG. 7] FIG. 7 is a schematic configuration diagram showing an automatic analyzer according to Embodiment 2.
[FIG. 8] FIG. 8 is a perspective view showing a structure of the second reagent temperature adjustment unit 14 in FIG. 7.
[FIG. 9A] FIG. 9A is a perspective view showing the internal fins 3 and the internal fin base 4 according to Embodiment 3.
[FIG. 9B] FIG. 9B is a perspective view of the internal fins 3 and the internal fin base 4 as viewed from a direction different from that in FIG. 9A.
[FIG. 10A] FIG. 10A is a perspective view showing the internal fins 3 and the internal fin base 4 according to Embodiment 4.
[FIG. 10B] FIG. 10B is a perspective view of the internal fins 3 and the internal fin base 4 as viewed from a direction different from that in FIG. 10A.
[FIG. 11] FIG. 11 is a schematic configuration diagram showing an automatic analyzer according to Embodiment 5.
[FIG. 12A] FIG. 12A is a perspective view showing the internal fins 3 and the internal fin base 4 according to Embodiment 5.
[FIG. 12B] FIG. 12B is a perspective view of the internal fins 3 and the internal fin base 4 as viewed from a direction different from that in FIG. 12A.

### Description of Embodiments

The disclosure relates to an automatic analyzer, particularly to an analyzer for adjusting a temperature of a reagent used for an analysis.

Hereinafter, embodiments of the automatic analyzer of the disclosure will be described with reference to the accompanying drawings. In the following embodiments, an immune automatic analyzer will be described as an example.

### Embodiment 1

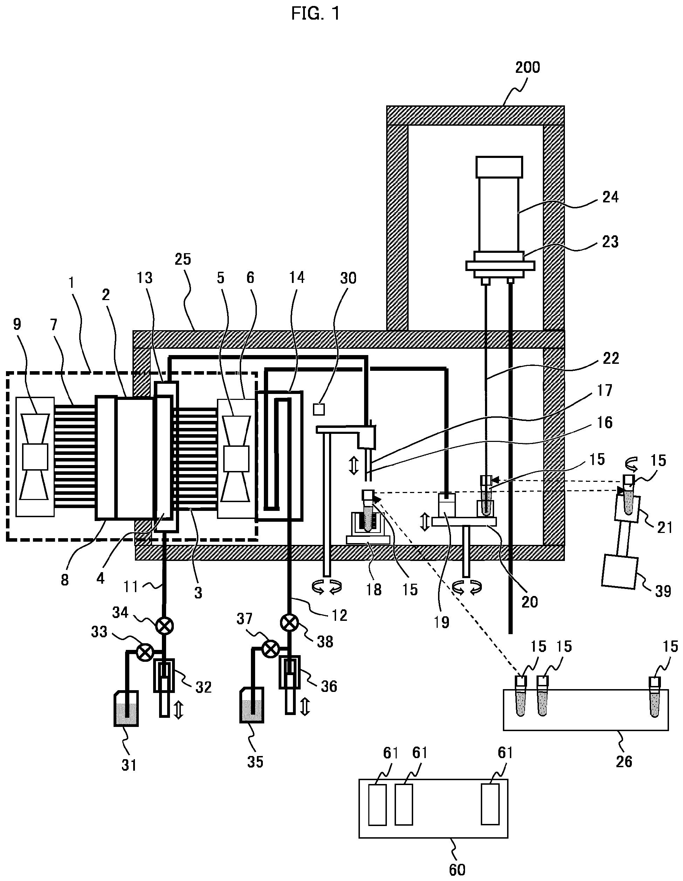

FIG. 1 is a schematic configuration diagram showing an automatic analyzer according to Embodiment 1.

The automatic analyzer shown in FIG. 1 includes a processing unit 25 that performs a preprocess of an analysis and an analysis unit 200. The processing unit 25 is provided with a temperature adjustment unit 1, a magnetic separation unit 18, a container holding unit 20, and an air temperature sensor 30. The analysis unit 200 is provided with a detection container 23 and a detector 24. Here, the "temperature adjustment" in the temperature adjustment unit 1 is an abbreviation for "temperature adjustment".

The temperature adjustment unit 1 includes a heating and cooling unit 2, internal fins 3, an internal fin base 4, an internal fan 5, an air blowing unit 6, external fins 7, an external fin base 8, and an external fan 9. The internal fins 3, the internal fin base 4, the internal fan 5, and the air blowing unit 6 of the temperature adjustment unit 1 are provided inside the processing unit 25. On the other hand, the external fins 7, the external fin base 8, and the external fan 9 of the temperature adjustment unit 1 are provided outside the processing unit 25.

The processing unit 25 is covered with a heat insulating member such that an internal temperature thereof can be controlled.

The magnetic separation unit 18 has a configuration in which a reaction container 15 can be provided. The magnetic separation unit 18 is provided with a discharge nozzle 16 for supplying a reagent, a solution, or the like to the reaction container 15 and an aspiration nozzle 17 for discharging an unnecessary solution.

The container holding unit 20 has a configuration in which the reaction container 15 and a reagent container 19 can be provided. A liquid in the reaction container 15 can be sent to the detection container 23 of the analysis unit 200 through an aspiration nozzle 22.

A first reagent storage unit 31 and a second reagent storage unit 35 are provided outside the processing unit 25. A reagent in the first reagent storage unit 31 is sent to the discharge nozzle 16 via a first reagent tube 11 and injected into the reaction container 15. A reagent in the second reagent storage unit 35 is sent to the reagent container 19 via a second reagent tube 12.

The first reagent tube 11 passes through a first reagent temperature adjustment unit 13. The second reagent tube 12 passes through a second reagent temperature adjustment unit 14. The first reagent tube 11 is provided with a syringe pump 32 and valves 33 and 34. The second reagent tube 12 is provided with a syringe pump 36 and valves 37 and 38.

In addition, a stirring unit 21 including a motor 39 is provided outside the processing unit 25.

Further, a reaction table 26 for holding a plurality of reaction containers 15 and an assay reagent storage unit 60 for holding a plurality of reagent bottles 61 are provided outside the processing unit 25.

Next, an outline of operations of the automatic analyzer will be described.

In FIG. 1, the plurality of reaction containers 15 are placed on the reaction table 26. Then, a specimen such as blood or urine and an assay reagent are aliquoted into each reaction container 15. The assay reagent is stored in the reagent bottle 61 held in the assay reagent storage unit 60.

A temperature of the reaction table 26 is maintained at a predetermined temperature by a heater (not shown), and a reaction between the specimen and the assay reagent is promoted. The reaction container 15 placed on the reaction table 26 for a predetermined time is transported to the magnetic separation unit 18 provided in the processing unit 25 by a transport mechanism (not shown) (dotted arrow).

In the magnetic separation unit 18, a process referred to as magnetic separation is performed to separate a magnetic component and a non-magnetic component in a reaction solution obtained by reacting the specimen and the assay reagent.

Then, the unnecessary solution is discharged to the aspiration nozzle 17. Next, a first reagent referred to a replacement liquid is discharged from the discharge nozzle 16. The first reagent is stored in the first reagent storage unit 31, and is sent, via the discharge nozzle 16, to the reaction container 15 on the magnetic separation unit 18 by operations of the syringe pump 32 and the valves 33 and 34.

A temperature of the first reagent discharged into the reaction container 15 is adjusted in the first reagent temperature adjustment unit 13 by a method to be described later.

After the magnetic separation process is completed, the reaction container 15 is transported to the stirring unit 21 by the transport mechanism (dotted arrow). In the stirring unit 21, stirring is performed by the motor 39 causing the reaction container 15 to rotate. After the stirring for a predetermined time is completed, the reaction container 15 is transported to the container holding unit 20 by the transport mechanism (dotted arrow). Then, the reaction solution that is a content of the reaction container 15 is guided to the detection container 23 of the analysis unit 200 via the aspiration nozzle 22.

In the detection container 23, the detector 24 detects a signal from the reaction solution. On the other hand, the reagent container 19 is placed on the container holding unit 20, and a second reagent is supplied from the second reagent storage unit 35 to the reagent container 19 by operations of the syringe pump 36 and the valves 37 and 38. A temperature of the reagent supplied to the reagent container 19 is adjusted in the second reagent temperature adjustment unit 14 by a method to be described later. The container holding unit 20 rotates, and the reagent in the reagent container 19 is guided to the detection container 23 via the aspiration nozzle 22 at a timing different from that of the reaction solution in the reaction container 15.

Air inside the processing unit 25 is adjusted to have a constant temperature by the temperature adjustment unit 1.

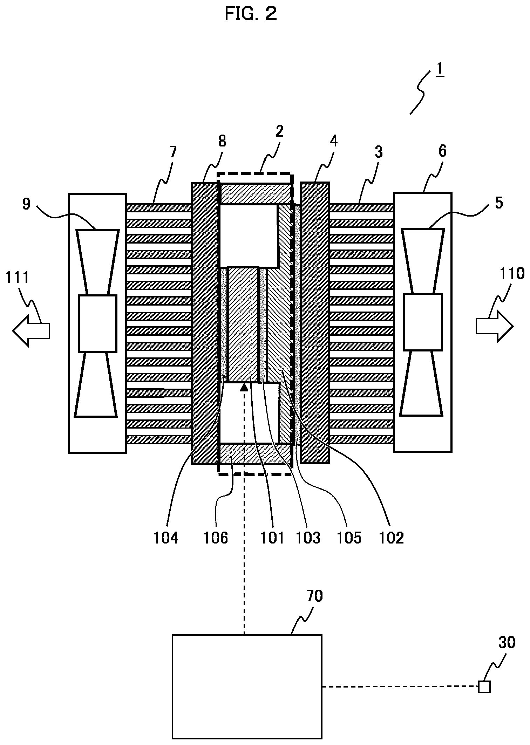

FIG. 2 is a configuration diagram showing the temperature adjustment unit 1 in FIG. 1.

FIG. 2 shows a control device 70 in addition to the configuration shown in FIG. 1. A detailed configuration of the heating and cooling unit 2 is also shown. The heating and cooling unit 2 is a unit that performs heating and cooling operations, and includes a Peltier element 101, a heat spreader 102, thermal interfaces 103 and 104, and a case 106 made of a resin or the like.

A plate fin, a pin fin, and the like are used for the internal fins 3 and the external fins 7. The heat spreader 102 is made of a metal such as aluminum, and serves to assist heat transfer between the Peltier element 101 and the internal fin base 4. The thermal interfaces 103 and 104 are thermal grease or sheet members having a high thermal conductivity, and improve a contact state between the Peltier element 101 and the heat spreader 102 and a contact state between the Peltier element 101 and the external fin base 8 to promote the heat transfer. A thermal interface 105 such as a sheet member having a high thermal conductivity is also provided between the heat spreader 102 and the internal fin base 4.

Next, operations of the temperature adjustment unit 1 will be described.

When an air temperature detected by the air temperature sensor 30 is higher than a target temperature, the control device 70 energizes the Peltier element 101 such that a surface of the Peltier element 101 on a heat spreader 102 side has a low temperature and a surface of the Peltier element 101 on an external fin base 8 side has a high temperature. The internal fan 5 is operated to blow air in a direction of an arrow 110. Accordingly, the air in the processing unit 25 is aspirated into the internal fins 3 and blown out from the air blowing unit 6 in the direction of the arrow 110. At this time, heat of the air is absorbed by the internal fins 3 and the internal fin base 4, and is absorbed by the Peltier element 101 through the thermal interface 105, the heat spreader 102, and the thermal interface 103. On the other hand, heat is generated (heat is radiated) from an opposite surface of the Peltier element 101, and the heat is transferred from the thermal interface 104 and the external fin base 8 to the external fins 7. The external fan 9 is operated to blow the air in a direction of an arrow 111. Accordingly, the heat of the external fins 7 and the external fin base 8 is radiated to air flowing between the external fins 7.

When the air temperature detected by the air temperature sensor 30 is lower than a target value, the Peltier element 101 is energized such that the surface of the Peltier element 101 on the heat spreader 102 side has a high temperature and the surface of the Peltier element 101 on the external fin base 8 side has a low temperature. The heat of the surrounding air is absorbed by the external fins 7 and the external fin base 8 when the surrounding air flows between the external fins 7, and is absorbed by the Peltier element 101 through the thermal interface 104. Heat is generated from the opposite surface of the Peltier element 101, and the heat is transferred to the internal fin base 4 and the internal fins 3 through the thermal interface 103, the heat spreader 102, and the thermal interface 105, and is radiated to the air flowing between the internal fins 3 by the internal fan 5, and the heated air is blown out from the air blowing unit 6 in the direction of the arrow 110.

An output of the Peltier element 101 is controlled by the control device 70 according to the air temperature detected by the air temperature sensor 30 and the target temperature. The output of the Peltier element 101 is controlled by, for example, changing an energization rate at which the Peltier element 101 is energized.

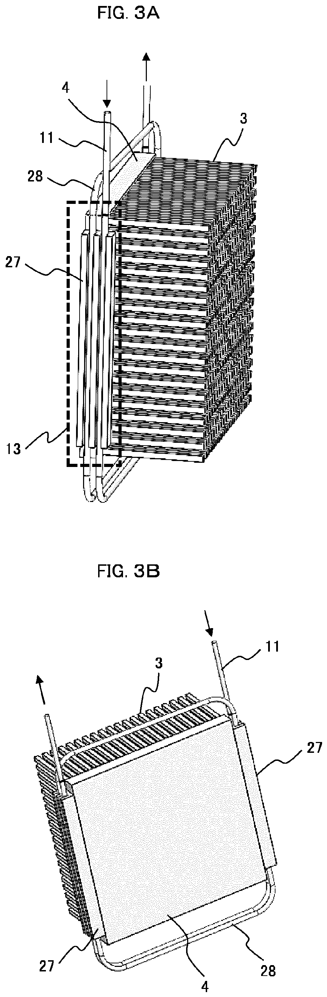

FIG. 3A is a perspective view showing the internal fins 3 and the internal fin base 4 in FIG. 2.

In FIG. 3A, the first reagent temperature adjustment unit 13 is a portion indicated by a dashed rectangle, and includes reagent temperature adjustment unit fins 27 and a first reagent temperature adjustment unit tube 28. The first reagent temperature adjustment unit tube 28 is provided between the reagent temperature adjustment unit fins 27, in other words, in groove portions of the reagent temperature adjustment unit fins 27.

FIG. 3B is a perspective view of the internal fins 3 and the internal fin base 4 as viewed from a direction different from that in FIG. 3A.

As shown in FIG. 3B, the reagent temperature adjustment unit fins 27 are provided so as to be in thermal contact with both end portions of the internal fin base 4. The first reagent temperature adjustment unit tube 28 is fitted into and in thermal contact with four groove portions of the reagent temperature adjustment unit fins 27. The first reagent temperature adjustment unit tube 28 constitutes a part of the first reagent tube 11.

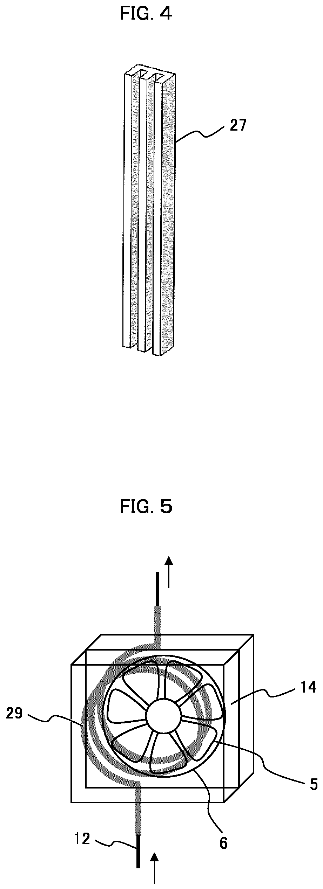

FIG. 4 is a perspective view showing the reagent temperature adjustment unit fin 27 in FIG. 3A.

The reagent temperature adjustment unit fin 27 shown in the FIG. 4 is formed of a metal having a high thermal conductivity such as an aluminum alloy. The reagent temperature adjustment unit fin 27 has three fins and groove portions formed between the fins.

The first reagent temperature adjustment unit tube 28 is a tube formed of stainless steel, a resin, or the like, and is fixed in close contact with the reagent temperature adjustment unit fins 27. A thermal interface such as grease or a resin having a high thermal conductivity may be provided between the first reagent temperature adjustment unit tube 28 and the reagent temperature adjustment unit fins 27. The first reagent temperature adjustment unit tube 28 and the reagent temperature adjustment unit fins 27 may be fixed by soldering or welding.

The reagent temperature adjustment unit fins 27 are fixed to the internal fin base 4 by screws (not shown) or the like. A thermal interface such as grease or a thermally conductive resin may be provided between the reagent temperature adjustment unit fins 27 and the internal fin base 4. The internal fin base 4 and the reagent temperature adjustment unit fins 27 may be fixed by using a resin having a high thermal conductivity and having adhesion surfaces on both sides, or an adhesive having a high thermal conductivity.

A reagent flowing through the first reagent temperature adjustment unit tube 28 is cooled or heated by the internal fin base 4 via the reagent temperature adjustment unit fins 27 and the first reagent temperature adjustment unit tube 28, and is then supplied to the reaction container 15 provided in the magnetic separation unit 18.

Arrows shown in FIGS. 3A and 3B indicate flow directions of the reagent. A heat exchange can be performed efficiently by flowing the reagent in a manner that a portion close to the Peltier element 101 is at a downstream side.

FIG. 5 is a perspective view showing a structure of the second reagent temperature adjustment unit 14 in FIG. 1.

As shown in FIG. 5, a second reagent temperature adjustment unit tube 29 is provided in a spiral shape on a blowing side of the internal fan 5. The second reagent temperature adjustment unit tube 29 constitutes a part of the second reagent tube 12. The second reagent flowing through the second reagent temperature adjustment unit tube 29 is cooled or heated by the air blown out from the internal fan 5, and is then supplied to the reagent container 19 (FIG. 1).

Arrows shown in FIG. 5 indicate the flow directions of the reagent. By disposing the second reagent temperature adjustment unit tube 29 in a spiral shape in a direction from downwind to upwind and flowing the reagent in this direction, the reagent can be efficiently cooled or heated.

As shown in FIG. 1, the reagent cooled or heated by the first reagent temperature adjustment unit 13 is guided to the reaction container 15 of the magnetic separation unit 18, and is transported to the stirring unit 21 after the magnetic separation process. In order to be used in common with other processes, the stirring unit 21 is often provided outside the processing unit 25 in which the air temperature is maintained to be constant. In order to maintain detection accuracy of the detector 24, it is necessary to adjust a temperature of the reaction solution after the stirring to a predetermined temperature range. Therefore, it is necessary to adjust the first reagent to be supplied to the magnetic separation unit 18 to have a low temperature when the ambient temperature is high, and to conversely adjust the first reagent to be supplied to the magnetic separation unit 18 to have a high temperature when the ambient temperature is low.

On the other hand, the reagent whose temperature is adjusted by the second reagent temperature adjustment unit 14 is supplied to the reagent container 19 on the container holding unit 20, and is then guided to the detection container 23. In order to maintain the detection accuracy of the detector 24, it is also necessary to maintain the temperature of the second reagent to be supplied to the reagent container 19 at a predetermined temperature.

Next, an effect of adjusting the temperatures of the reaction solution and the reagent to appropriate temperatures regardless of the ambient temperature, which is obtained by the configuration of the automatic analyzer according to the present embodiment will be described.

In the first reagent temperature adjustment unit 13, the first reagent temperature adjustment unit tube 28 and the internal fin base 4 are brought into contact with each other via the reagent temperature adjustment unit fins 27, and the reagent is cooled and heated by contact heat transfer from the portion close to the Peltier element 101. In contrast, in the second reagent temperature adjustment unit 14, the reagent is cooled and heated by forced convection heat transfer by the air blown out from the internal fan 5.

When the ambient temperature is high, as the ambient temperature becomes higher, a higher cooling capacity for cooling the air inside the processing unit 25 is required. Therefore, the output of the Peltier element 101 increases. Therefore, the temperature of the internal fin base 4 decreases. Accordingly, the temperature of the reagent adjusted by the first reagent temperature adjustment unit 13 is adjusted to be lower.

The reaction container 15 is stirred by the stirring unit 21 provided outside the processing unit 25 after the process performed by the magnetic separation unit 18. Since the ambient temperature of the stirring unit 21 is high, the temperature of the reaction solution in the reaction container 15 after the stirring rises due to an influence of the ambient temperature and reaches a target temperature range.

Conversely, when the ambient temperature is low, as the ambient temperature becomes lower, a higher heating capacity for heating the air inside the processing unit 25 is required. Therefore, the output of the Peltier element 101 increases. Therefore, the temperature of the internal fin base 4 increases. Accordingly, the temperature of the reagent adjusted by the first reagent temperature adjustment unit 13 is adjusted to be higher.

The reaction container 15 is stirred by the stirring unit 21 provided outside the processing unit 25 after the process performed by the magnetic separation unit 18. Since the ambient temperature of the stirring unit 21 is low, the temperature of the reaction solution in the reaction container 15 after the stirring deceases due to the influence of the ambient temperature and reaches the target temperature range.

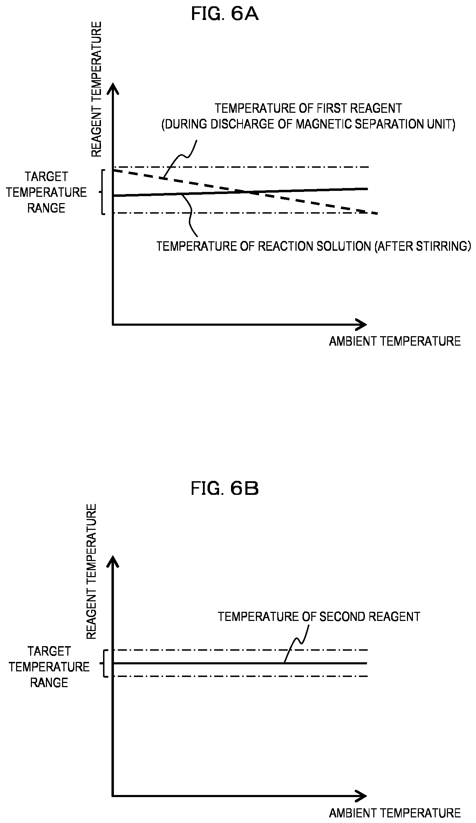

FIG. 6A summarizes the above contents, and is a graph showing a relationship between the ambient temperature of the automatic analyzer according to the present embodiment, the temperature of the first reagent, and the temperature of the reaction solution after the stirring. A horizontal axis represents the ambient temperature, and a vertical axis represents the reagent temperature.

In FIG. 6A, for the first reagent to be supplied to the magnetic separation unit 18 provided inside the processing unit 25, a decreasing function as indicated by a broken line is obtained since the temperature of the internal fin base 4 decreases as the ambient temperature becomes higher. On the other hand, the temperature of the reaction solution after the stirring outside the processing unit 25 is substantially constant as indicated by a solid line regardless of the ambient temperature. A range indicated by two one-dot chain lines is the target temperature range of the reaction solution.

On the other hand, since the output of the Peltier element 101 is controlled such that the temperature of the air blown from the processing unit 25 is constant, the temperature of the second reagent heated and cooled by the air in the second reagent temperature adjustment unit is a substantially constant temperature.

FIG. 6B is a graph showing a relationship between the ambient temperature of the automatic analyzer according to the present embodiment and the temperature of the second reagent. A horizontal axis represents the ambient temperature, and a vertical axis represents the reagent temperature.

In FIG. 6B, by controlling the output of the Peltier element 101, the temperature of the second reagent to be supplied to the reagent container 19 is substantially constant as shown by a solid line regardless of the ambient temperature. A range indicated by two one-dot chain lines is the target temperature range of the second reagent.

Since the first reagent and the second reagent can be adjusted to have different temperatures in this manner, liquid temperatures of the first reagent and the reaction container 15 after the stirring can be adjusted to appropriate temperatures regardless of the ambient temperature. Therefore, both the reaction solution and the reagent aspirated through the aspiration nozzle 22 into the detection container 23 are adjusted to have appropriate temperatures. Accordingly, high detection accuracy of the detector 24 is achieved.

In summary, the first reagent is heated or cooled beyond the target temperature range on a premise of an external stirring operation. On the other hand, due to a premise of the second reagent being operated only inside the processing unit 25, the second reagent is heated or cooled to fall within the target temperature range. Since such heating or cooling of the first reagent and the second reagent is performed by one temperature adjustment unit 1, an arrangement of the first reagent temperature adjustment unit tube 28 and the second reagent temperature adjustment unit tube 29 is appropriately selected.

In order to appropriately set the temperature of the first reagent, a length of a contact portion between the first reagent temperature adjustment unit tube 28 and the reagent temperature adjustment unit fins 27 of the first reagent temperature adjustment unit 13 may be appropriately set. The temperature of the first reagent to be supplied to the magnetic separation unit 18 can also be adjusted by making the direction in which the reagent flows in FIG. 5 reverse to the direction of the arrow.

According to the present embodiment, regardless of the ambient temperature, both the temperature of the reaction solution in the reaction container after the stirring and the temperature of the second reagent to be supplied to the reagent container can be adjusted to appropriate temperatures, and high detection accuracy of the detector can be achieved.

### Embodiment 2

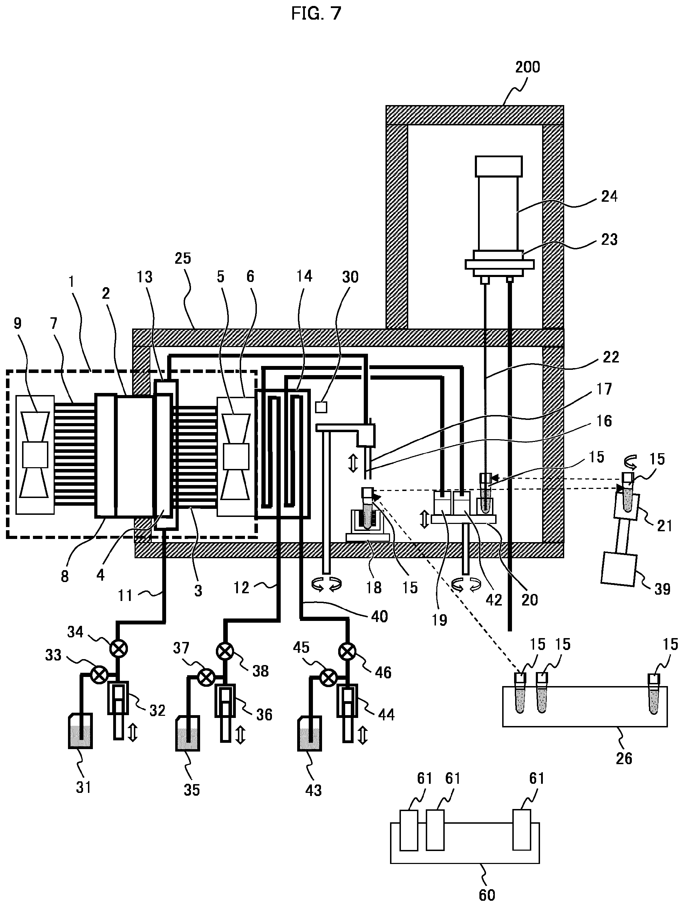

FIG. 7 is a schematic configuration diagram showing an automatic analyzer according to Embodiment 2.

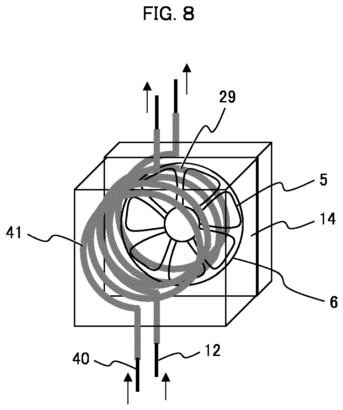

FIG. 8 is a perspective view showing a structure of the second reagent temperature adjustment unit 14 in FIG. 7.

In the present embodiment, differences from those of Embodiment 1 will be described. Description of the configurations common to those of Embodiment 1 is omitted.

As shown in FIG. 7, in the present embodiment, a third reagent storage unit 43 is provided. The third reagent storage unit 43 stores a third reagent. The third reagent is supplied to a reagent container 42 on the container holding unit 20 via a third reagent tube 40 by operations of a syringe pump 44 and valves 45 and 46. A temperature of the third reagent to be supplied to the reagent container 42 is adjusted in the same manner as the second reagent in the second reagent temperature adjustment unit 14.

The container holding unit 20 rotates, and the third reagent in the reagent container 42 is guided to the detection container 23 via the aspiration nozzle 22 at a timing different from both the reaction solution in the reaction container 15 and the first reagent in the reagent container 19.

As shown in FIG. 8, in the second reagent temperature adjustment unit 14, both the second reagent temperature adjustment unit tube 29 and a third reagent temperature adjustment unit tube 41 are provided in a spiral shape at a portion of the internal fan 5 where the air from the air blowing unit 6 hits.

The second reagent flowing through the second reagent temperature adjustment unit tube 29 is cooled or heated by the air blown out from the internal fan 5, and is then supplied to the reagent container 19. The third reagent flowing through the third reagent temperature adjustment unit tube 41 is cooled or heated by the air blown out from the internal fan 5, and is then supplied to the reagent container 42.

In FIG. 8, the second reagent temperature adjustment unit tube 29 is provided upstream of the third reagent temperature adjustment unit tube 41 in a flow of the air blown out from the internal fan 5, but the invention is not limited to this configuration, and the third reagent temperature adjustment unit tube 41 may be provided upstream of the second reagent temperature adjustment unit tube 29.

The second reagent and the third reagent that have passed through the second reagent temperature adjustment unit 14 are cooled or heated to have substantially the same temperature. A structure of the first reagent temperature adjustment unit 13 is the same as that in Embodiment 1, and as shown in FIG. 6A, the first reagent is adjusted to have a lower temperature as the ambient temperature becomes higher, and is adjusted to have a higher temperature as the ambient temperature becomes lower.

According to the present embodiment, all of the temperature of the reaction solution in the reaction container after the stirring, the temperature of the second reagent, and the temperature of the third reagent can be adjusted to appropriate temperatures regardless of the ambient temperature of the automatic analyzer, and high detection accuracy of a detector can be achieved.

### Embodiment 3

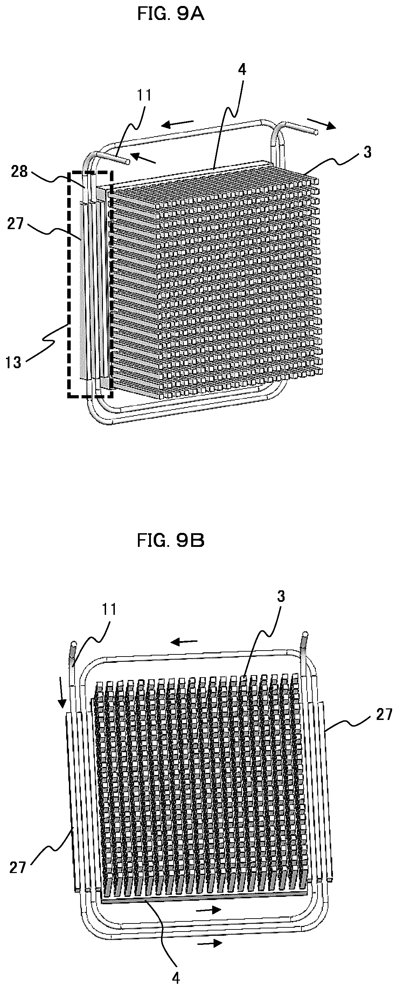

FIG. 9A is a perspective view showing the internal fins 3 and the internal fin base 4 according to Embodiment 3.

FIG. 9B is a perspective view of the internal fins 3 and the internal fin base 4 as viewed from a direction different from that in FIG. 9A.

In the present embodiment, differences from those of Embodiment 1 will be described. Description of the configurations common to those of Embodiment 1 is omitted.

As shown in FIG. 9A, in the present embodiment, a direction in which the reagent temperature adjustment unit fins 27 constituting the first reagent temperature adjustment unit 13 are attached is different by 90 degrees from that in Embodiment 1. That is, in FIG. 9A, a surface provided with groove portions in the reagent temperature adjustment unit fin 27 is parallel to a surface of the internal fin base 4 provided with the internal fins 3, which is a flat surface portion.

In the present embodiment, the same effects as those of Embodiment 1 can also be obtained. In the present embodiment, a dimension of the first reagent temperature adjustment unit 13 in a depth direction can be reduced.

### Embodiment 4

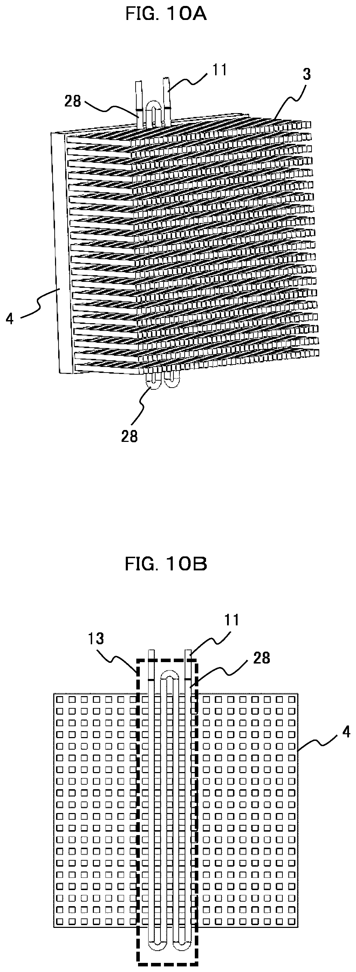

FIG. 10A is a perspective view showing the internal fins 3 and the internal fin base 4 according to Embodiment 4.

FIG. 10B is a perspective view of the internal fins 3 and the internal fin base 4 as viewed from a direction different from that in FIG. 10A.

In the present embodiment, differences from those of Embodiments 1 to 3 will be described. Description of configurations common to those of Embodiments 1 to 3 is omitted.

As shown in FIGS. 10A and 10B, in the present embodiment, unlike Embodiments 1 and 3, the reagent temperature adjustment unit fins 27 are not provided. The first reagent temperature adjustment unit tube 28 and the internal fin base 4 are in direct contact with each other.

A thermal interface such as grease or a resin having a high thermal conductivity may be provided between the first reagent temperature adjustment unit tube 28 and the internal fin base 4. In addition, the first reagent temperature adjustment unit tube 28 and the internal fin base 4 may be fixed by soldering or welding. Further, a fixing tool or the like for fixing the first reagent temperature adjustment unit tube and the internal fin base 4 may be separately provided.

In the present embodiment, the same effects as those of Embodiment 1 can also be obtained. In the case of the present embodiment, since the reagent temperature adjustment unit fins 27 are unnecessary, the number of components can be reduced, and a width of the first reagent temperature adjustment unit 13 can be reduced.

### Embodiment 5

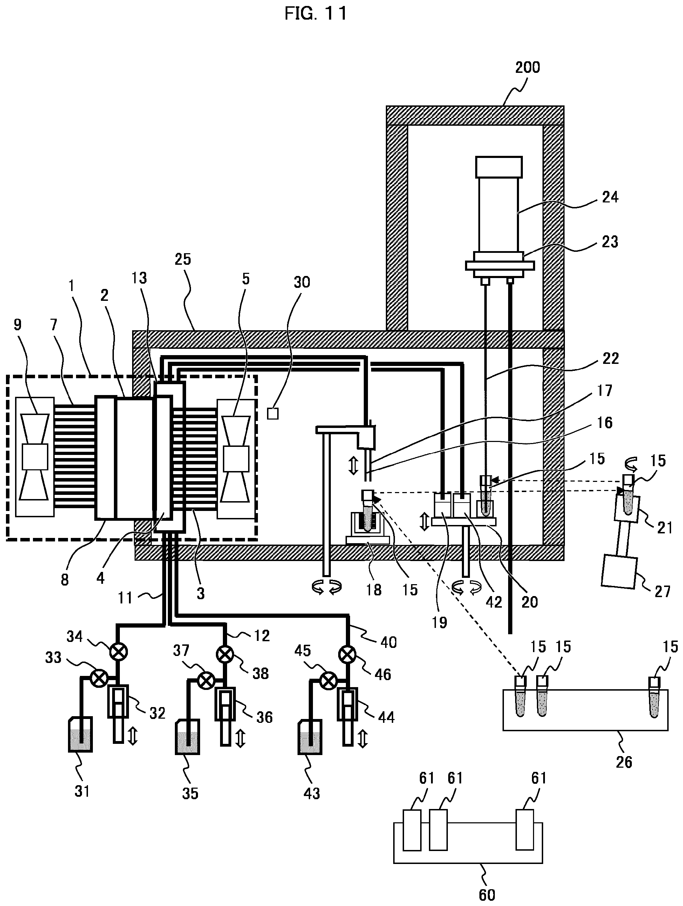

FIG. 11 is a schematic configuration diagram showing an automatic analyzer according to Embodiment 5.

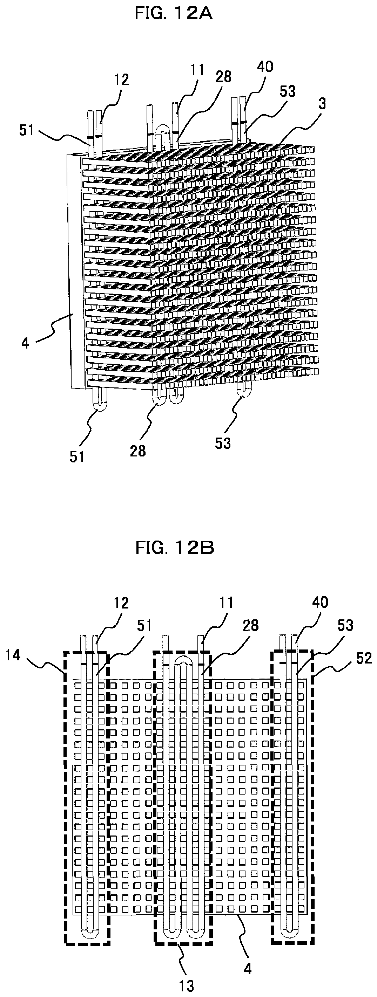

FIG. 12A is a perspective view showing the internal fins 3 and the internal fin base 4 according to Embodiment 5.

FIG. 12B is a perspective view of the internal fins 3 and the internal fin base 4 as viewed from a direction different from that in FIG. 12A.

In the present embodiment, differences from those of Embodiment 2 will be described. Description of configurations common to those of Embodiment 2 is omitted.

As shown in FIG. 11, in the present embodiment, all of the first reagent tube 11, the second reagent tube 12, and the third reagent tube 40 are in direct contact with the internal fin base 4.

As shown in FIGS. 12A and 12B, the first reagent temperature adjustment unit tube 28 of the first reagent temperature adjustment unit 13 is brought into contact with a vicinity of a center portion of the internal fin base 4. A second reagent temperature adjustment unit tube 51 of the second reagent temperature adjustment unit 14 is brought into contact with a vicinity of one end portion of the internal fin base 4. A third reagent temperature adjustment unit tube 53 of a third reagent temperature adjustment unit 52 is brought into contact with a vicinity of the other one end portion of the internal fin base 4.

The first reagent temperature adjustment unit tube 28, the second reagent temperature adjustment unit tube 51, and the third reagent temperature adjustment unit tube 53 may be in contact with the internal fin base 4 via a thermal interface such as grease or a resin having a high thermal conductivity. In addition, the first reagent temperature adjustment unit tube 28, the second reagent temperature adjustment unit tube 51, and the third reagent temperature adjustment unit tube 53 may be fixed to the internal fin base 4 by soldering or welding. Further, each of the first reagent temperature adjustment unit tube 28, the second reagent temperature adjustment unit tube 51, and the third reagent temperature adjustment unit tube 53 may be fixed to the internal fin base 4 by a fixing tool or the like.

As can be seen from the configuration of the temperature adjustment unit 1 shown in FIG. 2, the Peltier element 101 is smaller than the internal fin base 4, and is provided at a position projected in the vicinity of the center portion of the internal fin base 4. With such a structure, in an operation of cooling an internal fin base 4 side at a high ambient temperature, a temperature in the vicinity of the center portion of the internal fin base 4 becomes lower than a temperature in the vicinity of the end portion of the internal fin base 4, and in an operation of heating the internal fin base 4 side at a low ambient temperature, the temperature in the vicinity of the center portion of the internal fin base 4 becomes higher than the temperature in the vicinity of the end portion of the internal fin base 4.

Therefore, with such a structure, the second reagent temperature adjustment unit 14 and the third reagent temperature adjustment unit 52 shown in FIG. 12B have a temperature lower than that of the first reagent temperature adjustment unit 13. Accordingly, the temperature of the first reagent can be increased, and the temperatures of the second reagent and the third reagent can be decreased. That is, the second reagent and the third reagent can be adjusted to have temperatures different from that of the first reagent.

According to the present embodiment, all of the temperature of the reaction solution in the reaction container after the stirring, the temperature of the second reagent, and the temperature of the third reagent can be adjusted to appropriate temperatures regardless of the ambient temperature of the automatic analyzer, and high detection accuracy of a detector can be achieved.

Although the above embodiments are directed to an immune analyzer, the invention can also be applied to other analyzers requiring the temperature adjustment of the reagent to a plurality of temperatures.

Hereinafter, desired embodiments according to the disclosure will be collectively described.

In an automatic analyzer, a temperature adjustment unit includes a fin configured to heat or cool air inside a processing unit, and a fan configured to circulate the air.

A first reagent temperature adjustment unit includes a first reagent temperature adjustment unit tube which is in contact with the fin or a fin base provided with the fin and through which a first reagent flows, and a second reagent temperature adjustment unit includes a second reagent temperature adjustment unit tube which is provided at an air blowing unit of the fan and through which a second reagent flows.

The temperature adjustment unit further includes a reagent temperature adjustment unit fin, the first reagent temperature adjustment unit includes a first reagent temperature adjustment unit tube which is in contact with the reagent temperature adjustment unit fin and through which the first reagent flows, and the second reagent temperature adjustment unit includes a second reagent temperature adjustment unit tube which is provided at an air blowing unit of the fan and through which the second reagent flows.

The first reagent temperature adjustment unit has a configuration for heating or cooling the first reagent by contact heat transfer, and the second reagent temperature adjustment unit has a configuration for heating or cooling the second reagent by contact heat transfer.

The temperature adjustment unit includes a fin configured to heat or cool the air inside the processing unit and a fan configured to circulate the air, the first reagent temperature adjustment unit includes a first reagent temperature adjustment unit tube which is in contact with a fin or a fin base provided with the fin and through which the first reagent flows, the second reagent temperature adjustment unit includes a second reagent temperature adjustment unit tube which is in contact with the fin or the fin base provided with the fin and through which the second reagent flows, the temperature adjustment unit includes a Peltier element, the Peltier element has a heat transfer area smaller than that of the fin base, the first reagent temperature adjustment unit tube is provided on a projection surface of the Peltier element on a side opposite to a surface on which the Peltier element is in contact with the fin base, and the second reagent temperature adjustment unit tube is provided at a portion other than the projection surface of the Peltier element.

The temperature adjustment unit further includes a third reagent temperature adjustment unit, the third reagent temperature adjustment unit has a configuration for heating or cooling a third reagent by contact heat transfer or forced convection heat transfer, and the first reagent temperature adjustment unit is configured to have a heat exchange amount larger than those of the second reagent temperature adjustment unit and the third reagent temperature adjustment unit.

The temperature adjustment unit includes a fin configured to heat or cool the air inside the processing unit and a fan configured to circulate the air, the first reagent temperature adjustment unit includes a first reagent temperature adjustment unit tube which is in contact with the fin or a fin base provided with the fin and through which the first reagent flows, the second reagent temperature adjustment unit includes a second reagent temperature adjustment unit tube which is provided at an air blowing unit of the fan and through which the second reagent flows, and the third reagent temperature adjustment unit includes a third reagent temperature adjustment unit tube which is provided at the air blowing unit of the fan and through which the third reagent flows.

The processing unit includes a magnetic separation unit configured to separate a magnetic component and a non-magnetic component in a reaction solution obtained by reacting a specimen and an assay reagent, and has a configuration for supply the first reagent whose temperature is adjusted by the first reagent temperature adjustment unit to a reaction container placed in the magnetic separation unit.

### Reference Signs List

- 1:: temperature adjustment unit
- 2:: heating and cooling unit
- 3:: internal fin
- 4:: internal fin base
- 5:: internal fan
- 7:: external fin
- 8:: external fin base
- 9:: external fan
- 11:: first reagent tube
- 12:: second reagent tube
- 13:: first reagent temperature adjustment unit
- 14:: second reagent temperature adjustment unit
- 15:: reaction container
- 16:: discharge nozzle
- 17:: aspiration nozzle
- 18:: magnetic separation unit
- 19:: reagent container
- 20:: container holding unit
- 21:: stirring unit
- 22:: aspiration nozzle
- 23:: detection container
- 24:: detector
- 25:: processing unit
- 26:: reaction table
- 27:: reagent temperature adjustment unit fin
- 28:: first reagent temperature adjustment unit tube
- 29:: second reagent temperature adjustment unit tube
- 30:: air temperature sensor
- 31:: first reagent storage unit
- 32:: syringe pump
- 33:: valve
- 34:: valve
- 35:: second reagent storage unit
- 36:: syringe pump
- 37:: valve
- 38:: valve
- 40:: third reagent tube
- 41:: third reagent temperature adjustment unit tube
- 42:: reagent container
- 43:: third reagent storage unit
- 44:: syringe pump
- 45:: valve
- 46:: valve
- 51:: second reagent temperature adjustment unit tube
- 52:: third reagent temperature adjustment unit
- 53:: third reagent temperature adjustment unit tube
- 60:: assay reagent storage unit
- 61:: reagent bottle
- 70:: control device
- 101:: Peltier element
- 102:: heat spreader
- 103, 104, 105:: thermal interface
- 106:: case
- 200:: analysis unit

## Claims

1. An automatic analyzer comprising:
an analysis unit configured to perform an analysis on a specimen; and
a processing unit configured to perform a preprocess on the specimen before the analysis, wherein
the processing unit is provided with a temperature adjustment unit configured to heat or cool air inside the processing unit,
the temperature adjustment unit includes a first reagent temperature adjustment unit and a second reagent temperature adjustment unit,
the first reagent temperature adjustment unit has a configuration for heating or cooling a first reagent by contact heat transfer,
the second reagent temperature adjustment unit has a configuration for heating or cooling a second reagent by the contact heat transfer or forced convection heat transfer, and
the first reagent temperature adjustment unit is configured to have a heat exchange amount larger than a heat exchange amount of the second reagent temperature adjustment unit.

2. The automatic analyzer according to claim 1, wherein
the temperature adjustment unit includes a fin configured to heat or cool the air inside the processing unit, and a fan configured to circulate the air.

3. The automatic analyzer according to claim 2, wherein
the first reagent temperature adjustment unit includes a first reagent temperature adjustment unit tube which is in contact with the fin or a fin base provided with the fin and through which the first reagent flows, and
the second reagent temperature adjustment unit includes a second reagent temperature adjustment unit tube which is provided at an air blowing unit of the fan and through which the second reagent flows.

4. The automatic analyzer according to claim 2, wherein
the temperature adjustment unit further includes a reagent temperature adjustment unit fin,
the first reagent temperature adjustment unit includes a first reagent temperature adjustment unit tube which is in contact with the reagent temperature adjustment unit fin and through which the first reagent flows, and
the second reagent temperature adjustment unit includes a second reagent temperature adjustment unit tube which is provided at an air blowing unit of the fan and through which the second reagent flows.

5. The automatic analyzer according to claim 1, wherein
the first reagent temperature adjustment unit has a configuration for heating or cooling the first reagent by contact heat transfer, and
the second reagent temperature adjustment unit has a configuration for heating or cooling the second reagent by contact heat transfer.

6. The automatic analyzer according to claim 1, wherein
the temperature adjustment unit includes a fin configured to heat or cool the air inside the processing unit, and a fan configured to circulate the air,
the first reagent temperature adjustment unit includes a first reagent temperature adjustment unit tube which is in contact with the fin or a fin base provided with the fin and through which the first reagent flows,
the second reagent temperature adjustment unit includes a second reagent temperature adjustment unit tube which is in contact with the fin or the fin base provided with the fin and through which the second reagent flows,
the temperature adjustment unit includes a Peltier element,
the Peltier element has a heat transfer area smaller than a heat transfer area of the fin base,
the first reagent temperature adjustment unit tube is provided on a projection surface of the Peltier element on a side opposite to a surface on which the Peltier element is in contact with the fin base, and
the second reagent temperature adjustment unit tube is provided at a portion other than the projection surface of the Peltier element.

7. The automatic analyzer according to claim 1, wherein
the temperature adjustment unit further includes a third reagent temperature adjustment unit,
the third reagent temperature adjustment unit has a configuration for heating or cooling a third reagent by contact heat transfer or forced convection heat transfer, and
the first reagent temperature adjustment unit is configured to have a heat exchange amount larger than heat exchange amounts of the second reagent temperature adjustment unit and the third reagent temperature adjustment unit.

8. The automatic analyzer according to claim 7, wherein
the temperature adjustment unit includes a fin configured to heat or cool the air inside the processing unit, and a fan configured to circulate the air,
the first reagent temperature adjustment unit includes a first reagent temperature adjustment unit tube which is in contact with the fin or a fin base provided with the fin and through which the first reagent flows,
the second reagent temperature adjustment unit includes a second reagent temperature adjustment unit tube which is provided at an air blowing unit of the fan and through which the second reagent flows, and
the third reagent temperature adjustment unit includes a third reagent temperature adjustment unit tube which is provided at the air blowing unit of the fan and through which the third reagent flows.

9. The automatic analyzer according to any one of claims 1 to 8, wherein
the processing unit includes a magnetic separation unit configured to separate a magnetic component and a non-magnetic component in a reaction solution obtained by reacting the specimen and an assay reagent, and has a configuration for supplying the first reagent whose temperature is adjusted by the first reagent temperature adjustment unit to a reaction container placed in the magnetic separation unit.
